# EUROPÄISCHE PATENTSCHRIFT

(11) **EP 3 310 563 B1**
(45) Veröffentlichungstag und Bekanntmachung des Hinweises auf die Patenterteilung: **11.01.2023**
(21) Anmeldenummer: 16747722.3
(22) Anmeldetag: 25.05.2016
(51) Int. Cl.: B29D 30/06, B29D 30/00

(54) **HANDHABUNGSVORRICHTUNG FÜR REIFEN**
HANDLING DEVICE FOR TIRES
DISPOSITIF DE MANIPULATION DE PNEUMATIQUES

(30) Priorität: 22.06.2015 DE 102015008118
(43) Veröffentlichungstag der Anmeldung: 25.04.2018
(73) Patentinhaber: Harburg-Freudenberger Maschinenbau GmbH, 21079 Hamburg (DE)
(72) Erfinder: BAHLKE, Stefan, 21337 Lüneburg (DE)
(74) Vertreter: Klickow & Wetzel PartGmbB
(86) Internationale Anmeldenummer: PCT/DE2016/000225
(87) Internationale Veröffentlichungsnummer: WO 2016/206670

(56) Entgegenhaltungen:
- DE-A1- 3 443 947
- JP-A- 2006 297 778
- US-A- 4 474 399
- US-A- 5 746 964

## Beschreibung

Die Erfindung betrifft eine Handhabungsvorrichtung für Reifen gemäß Anspruch 1 und ihre Verwendung gemäß Anspruch 19.

Vorteilhafte Weiterbildungen der Erfindung sind Gegenstand der Unteransprüche.

Die Herstellung eines Reifens, beispielsweise für Fahrzeuge wie Autos oder Motorräder, ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung, miteinander verbunden werden müssen. Der Vulkanisierungsprozess ist ebenfalls maßgeblich hinsichtlich der Material- und Haftungseigenschaften des fertigen Reifens.

Nicht nur der fertige Reifen als Endprodukt des Reifenherstellungsprozesses, sondern bereits der Reifenrohling ist ein hochkomplexes und aus vielen Halbzeugelementen bestehendes Bauteil. Infolge des vielschichtigen Aufbaus müssen die Einzelkomponenten zunächst und vor einem Vulkanisierungsvorgang zusammengefügt werden, d.h. die Reifenkomponenten werden größenrichtig vereinzelt und lage-, positions-, orientierungsgenau einer Karkasstrommel zugeführt, die sich innerhalb einer Reifenaufbaumaschine befindet. Auf diese Weise wird der Reifenrohling hergestellt und für die Vulkanisierung vorbereitet.

Viele der Reifenkomponenten liegen als bahn- und/oder bogenförmige Halbzeuge vor: Verschiedene Gummimischungen und kautschukbasierende Kompositwerkstoffe, Textilgewebe bzw. Textilkord, Stahlgürtelgewebe und kautschukummantelte Wulstkerne. Um diese bahn- und/oder bogenförmige Halbzeuge der Karkasstrommel zuzuführen werden innerhalb einer Reifenaufbaumaschine teilweise Lagenserver verwendet.

Infolge der erheblichen Anzahl von Produktionsschritten sind Produktionsstätten in großen Hallen realisiert und umfassen für die einzelnen Produktionsschritte geeignete Maschinen, Anlagen und Handhabungsmittel. Ergänzt werden diese Produktionslinien oder Produktionszentren durch Prestream- und Downstream- Equipment zur Vorbereitung von Reifenkomponenten oder Nachbereitung beziehungsweise Verpackung der fertigen Reifen.

Ein häufig erforderlicher Nachbehandlungsprozess nach der Vulkanisation kann durch eine gezielte Abkühlung des restwärmebehafteten Fertigreifens und optional unter einer Innendruckbeaufschlagung erfolgen. Da der restwärmebehafteten Fertigreifen strukturell instabil und sehr empfindlich ist, werden an die Handhabungsvorrichtungen zur Reifenentnahme aus dem Behandlungsraum der Reifenvulkanisiermaschine und Transport beziehungsweise Einlegen in die Nachbehandlungseinrichtung besonders hohe Anforderungen gestellt. Daher werden Handhabungsvorrichtungen mit geeigneten Greifwerkzeugen ausgestattet, die auch die empfindlichen Reifen greifen und aufnehmen können. Greifwerkzeuge dieser Ausbildung sind aufwändig und kostspielig.

Handhabungsvorrichtungen, die wegen ihrer Funktion innerhalb des Reifenherstellungsprozesses und in Bezug auf den Behandlungsraum der Reifenvulkanisiermaschine auch als Belader oder Entlader bezeichnet werden, müssen den handzuhabenden Reifen oder Reifenrohling über Wegstrecken in allen Raumrichtungen bewegen und gegebenenfalls die Reifenorientierung ändern.

Weiterhin müssen Bewegungen und Orientierungsänderungen möglichst schnell durchgeführt werden, um die benötigten Handhabungs- und Transportzeiten gering zu halten und die Gesamtprozesszeit der Reifenherstellung zu minimieren.

Auch können Positionierungsgenauigkeiten mit geringer Lage- und/oder Orientierungsabweichung zum Anforderungsspektrum von Handhabungsvorrichtungen zählen. Diese können beispielsweise bei dem Beladen beziehungsweise Einlegen des Reifenrohlings in die Reifenform, in den Container oder den Behandlungsraum erforderlich sein. Positionierungspräzision ist auch erforderlich, wenn die restwärmebehafteten Fertigreifen zum Zweck der Nachbehandlung in den Post Cure Inflator oder den Post Cure Device eingelegt werden, beispielsweise um den Fertigreifen mit seiner Reifenwulst lagegenau auf dem Reifenteller abzulegen.

Handhabungsvorrichtungen werden häufig durch einer an einer Basis festgelegten Auskragung gebildet. Die Auskragung ist an einem Ende mit der Basis über ein Gelenk verbunden und weist in der Regel an ihrem anderen Ende ein Greifwerkzeug auf. Die gelenkige Festlegung der Auskragung an der Basis unterstützt dessen Verschwenken relativ zur Basis.

Nachteilig an diesen Konstruktionen ist, dass die realisierbaren Wegstrecken der Greifwerkzeuge durch die Auskragungslänge definiert, festgelegt und erheblich eingeschränkt sind.

Ein weiteres Problem gattungsgemäßer Handhabungsvorrichtungen ist die beschränkte Bewegungskinematik. Werden Bewegungsfreiheitsgrade der greifwerkzeugtragenden Auskragung oder Ausleger durch ein Gelenk realisiert, kann der Ausleger lediglich um diesen Drehpunkt verschwenkt werden. Als Konsequenz ist es den Greifwerkzeugen nur möglich, sich längs eines Kreisbogens zu bewegen.

Durch die eingeschränkten Wegstrecken und die auf Kreisbögen festgelegten Bewegungsmuster der Handhabungsvorrichtungen beziehungsweise der Greifwerkzeuge müssen Vorrichtungen dieser Art räumlich sehr nah an der Reifenvulkanisiermaschine platziert sein, um mit den Greifwerkzeugen den Behandlungsraum erreichen und die Reifenrohlinge einlegen beziehungsweise die Fertigreifen entnehmen zu können. Infolge dieses Platzierungszwanges muss in der Regel eine Handhabungsvorrichtung einer Reifenvulkanisiermaschine zugeordnet sein.

Üblicherweise kann deshalb die Handhabungsreichweite nicht auf eine zweite oder mehrere Reifenvulkanisiermaschinen erstreckt werden. Insbesondere wegen der aufwändigen und kostspieligen Konstruktion der Greifwerkzeuge, die auch für sehr empfindliche restwärmebehaftete Fertigreifen bei dessen Entnahme aus der Reifenvulkanisiermaschine geeignet sein müssen, ist diese Nutzungseinschränkung erheblich nachteilig.

Aus den Dokumente DE 34 43 947 A sowie US 5 746 964 A sind bereits Handhabungsvorrichtungen zur Verwendung im Bereich von Reifenvulkanisiermaschinen bekannt. Die entsprechenden Vorrichtungen sind mit Greifwerkzeugen zur Beaufschlagung von Reifen versehen. Die Greifwerkzeuge werden jeweils von Werkzeugarmen gehaltert und positioniert.

Aus der DE 39 18 209 A1 ist bereits ein Belader bzw. Entlader für eine Reifenheizpresse bekannt. Ein Werkzeug zum Ergreifen eines Rohreifens wird von einem Tragarm gehaltert. Unter Verwendung von zwei Schwenkgelenken sowie linearen Verbindungsmitteln sowie linearen Stellgliedern ist eine Positionierung des Werkzeuges möglich.

Es ist Aufgabe der Erfindung, eine Handhabungsvorrichtung für Reifen der einleitend genannten Art bereitzustellen, welche die genannten Nachteile wenigstens teilweise reduziert und eine kostengünstige Gesamtkonstruktion unterstützt.

Zur Lösung schlägt die erfindungsgemäße Konstruktion vor, eine Handhabungvorrichtung laut Anspruch 1.

Die erfindungsgemäße Lehre erkennt, dass sich wenigstens die Handhabungsreichweite verbessern lässt durch einen schwenkbar an einer Basis festgelegten Ausleger, der das Greifwerkzeug in einer ebenfalls schwenkbaren Weise haltert. Durch diese Anordnung wird ein Verschwenken des Auslegers relativ zur Basis und/oder ein Verschwenken des Greifwerkzeugs relativ zur Basis und/oder dem Ausleger unterstützt. Die Erfindung sieht vor, dass die sich ergebenden wenigstens zwei Verschwenkfreiheitsgrade entweder autark oder wenigstens teilweise parallel oder wenigstens teilweise koordiniert und zu einer Gesamtbewegungsbahn geometrisch addiert werden. Werden die Verschwenkmöglichkeiten sequentiell, das heißt schrittweise nacheinander durchgeführt, ergeben sich relativ zu den Drehpunkten definierte Kreisbogenbewegungen. Die Gesamtbewegungsbahn entspricht in diesem Fall einer mathematischen Funktion, welche die beiden Kreisbögen beschreibt und über eine Unstetigkeitsstelle verbindet.

Werden die Verschwenkmöglichkeiten vollständig oder teilweise zeitgleich und wenigstens in Teilen der zur Verfügung stehenden Kreisbogenbahn realisiert, ist es durch die Überlagerung der Kreisbogenbewegungen möglich, eine Bewegungsbahn zu generieren, die einer in weiten Bereichen und vorzugsweise stetigen Funktion entspricht. Die sich ergebende Bewegungsbahn kann sowohl zur Erweiterung der Handhabungsreichweite der Greifwerkzeuge als auch zur Erhöhung der Flexibilität hinsichtlich der anfahrbaren Greifpunkte genutzt werden.

Um dies zu erreichen, ist es erforderlich, auf das Bogenmaß der jeweiligen Kreisbewegungen, deren Relation zueinander und/oder den Start und den Stopp der Verschwenkungen in kontrollierter Weise Einfluss nehmen zu können. Anders ausgedrückt: Zur Erzielung einer definierten Gesamtbewegungsbahn ist es erforderlich, die absoluten Schwenkbewegungen zum einen und in ihrer Relation zueinander zum anderen gezielt zu beeinflussen.

Die Erfindung sieht zur Lösung dieser Aufgabe wenigstens ein Kopplungsmittel vor, dass zumindest bereichsweise die einzelnen Schwenkbewegungen zu einer Gesamtbewegungsbahn koordiniert. Weiterhin ist daran gedacht, dem Kopplungsmittel zusätzliche funktionale Aufgaben zu übertragen und/oder konstruktive Ausgestaltungen zu realisieren.

Das Kopplungsmittel kann verschieden ausgestaltet sein, um die relativen Kreisbogenbahnen der einzelnen Schwenkbewegungen um die installierten Drehpunkte herum zu koordinieren und in eine Gesamtbewegungsbahn zu überführen. Beispielsweise kann ein Gestänge mit endseitigen Schwenkfreiheitsgraden ortsfest oder relativbeweglich an den zueinander verschwenkbaren Komponenten festgelegt sein und über die Positionierung eine definierte Gesamtbewegungsbahn koordinieren. Eine andere Möglichkeit besteht in einem zweiten Auslegerarm, der an einer Basis schwenkbar festgelegt ist und die Greifwerkzeugkomponente koppelt. Weiterhin kann der Erfindungsgedanke durch eine Kopplung über ein Schrittgetriebe oder eine Kulissensteinanordnung umgesetzt werden.

Das erfindungsgemäße wenigstens eine Kopplungsmittel zur Bewegungskoordination ist vorzugsweise derart geometrisch und/oder funktionell konstruiert, dass der Bogenmaßbetrag wenigstens einer Schwenkbewegung maximiert ist.

Ein Ausführungsbeispiel der erfindungsgemäßen Handhabungsvorrichtung für Reifen ist in den Figuren dargestellt. Es zeigen:
- Figur 1:: die Draufsicht auf eine Reifenvulkanisiermaschine (100) mit zwei Behandlungsräumen (110) beziehungsweise zwei benachbart angeordnete Reifenvulkanisiermaschinen (100) mit Handlingsequipment realisiert durch Handhabungsvorrichtungen (30) in Form von Beladern (33), Entladern (31) und Transportvorrichtungen (60, 300),
- Figur 2:: die perspektivische Ansicht auf eine Handhabungsvorrichtungen (30) ausgebildet als Entlader (31),
- Figur 3:: die dreidimensionale Ansicht auf eine Reifenvulkanisiermaschine (100) mit zwei Behandlungsräumen (110) beziehungsweise zwei benachbart angeordnete Reifenvulkanisiermaschinen (100) mit Handlingsequipment ähnlich der Situation wie sie Figur 1 abbildet,
- Figur 4:: die Draufsicht auf die perspektivische Darstellung einer Reifenvulkanisiermaschine (100) mit zwei Behandlungsräumen (110) beziehungsweise zwei benachbart angeordnete Reifenvulkanisiermaschinen (100) mit Handlingsequipment realisiert durch Handhabungsvorrichtungen (30) in Form von Beladern (33), Entladern (31),
- Figur 5:: die Draufsicht auf ein perspektivisches Modell der erfindungsgemäßen Handhabungsvorrichtung (30) in einem Ausführungsbeispiel als Entlader (31) in der Nähe einer ersten möglichen Endlage einer Gesamtbewegungsbahn,
- Figur 6:: die Draufsicht auf ein perspektivisches Modell der erfindungsgemäßen Handhabungsvorrichtung (30) analog zu Figur 5 in einem Ausführungsbeispiel als Entlader (31) in einer möglichen Position der Gesamtbewegungsbahn,
- Figur 7:: die Handhabungsvorrichtung (30) analog zu Figur 5 und 6 in einer weiteren möglichen Position der Gesamtbewegungsbahn,
- Figur 8:: die Handhabungsvorrichtung (30) analog zu Figur 5 und 6 in einer dritten möglichen Position der Gesamtbewegungsbahn,
- Figur 9:: die Handhabungsvorrichtung (30) analog zu Figur 5 bis 8 in der Nähe einer zweiten möglichen Endlage,
- Figur 10:: die dreidimensionale Ansicht auf eine Reifenvulkanisiermaschine (100) mit einem Behandlungsraum (110) und der Handhabungsvorrichtung (30) mit aufgenommenem Reifen (200) und
- Figur 11:: die Handhabungsvorrichtung (30) in einer Position mit Greifwerkzeug (32) innerhalb des Behandlungsraumes (110).

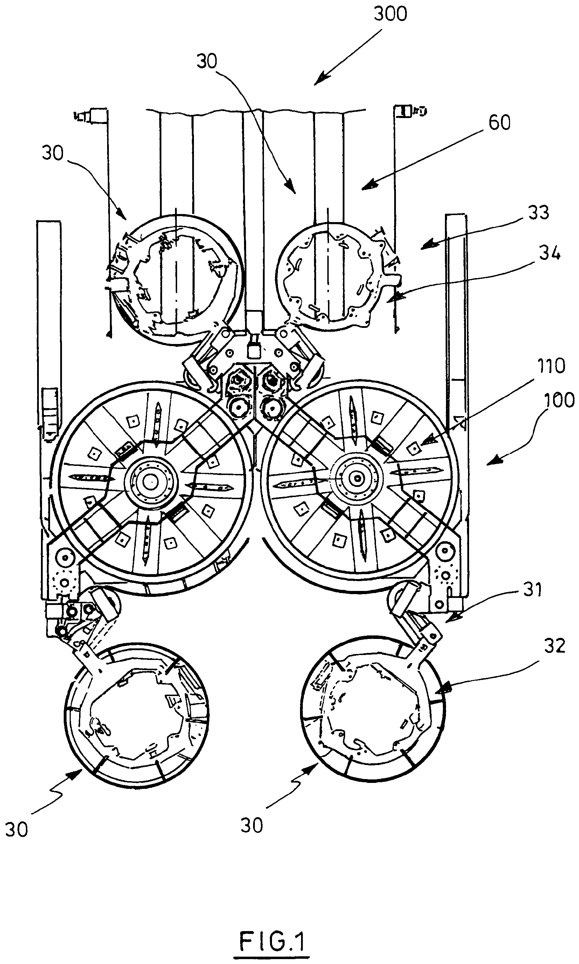

Figur 1 zeigt die Draufsicht auf eine Reifenvulkanisiermaschine (100) mit zwei Behandlungsräumen (110) beziehungsweise zwei benachbart angeordnete Reifenvulkanisiermaschinen (100) mit je einem Behandlungsraum. Vorgesehen ist Handlingsequipment realisiert durch Handhabungsvorrichtungen (30) in Form von Beladern (33), Entladern (31) und Transportvorrichtungen (60, 300).

Die Draufsicht gemäß Figur 1 verdeutlicht die Funktion und die Dimensionsverhältnisse des Handlingsequipments (30, 60, 300) generell und die Handhabungsvorrichtungen (30) im Besonderen. Zur Durchführung des Vulkanisierungsprozesses ist die Zufuhr, Beladen, Entladen und Abfuhr von Reifen in und aus dem Behandlungsraum erforderlich. Der erfindungsgemäßen Handhabungsvorrichtung (30) kommt in diesem Zusammenhang insbesondere das Be- und Entladen als Aufgaben zu.

Im gezeigten Verwendungsbeispiel sind vier Handhabungsvorrichtungen (30) installiert, jeweils zwei sind dabei einer Behandlungskammer (110) zugeordnet. Pro Behandlungskammer (110) ist eine Handhabungsvorrichtung (30) als Belader (33) und eine als Entlader (31) vorgesehen. Die funktionelle Unterscheidung zwischen Belader und Entlader ergibt sich durch die Gestaltung der Greifwerkzeuge (32, 34), welche reversibel gestaltet und damit auswechselbarer Bestandteil der Handhabungsvorrichtung ist. Unabhängig von dem aufgenommenen Greifwerkzeug (32, 34) ist der konstruktive Aufbau der Handhabungsvorrichtung (30) weitgehend gleich, insbesondere wird durch eine geeignete Aufnahme die Verwendung unterschiedlicher Greifwerkzeuge unterstützt.

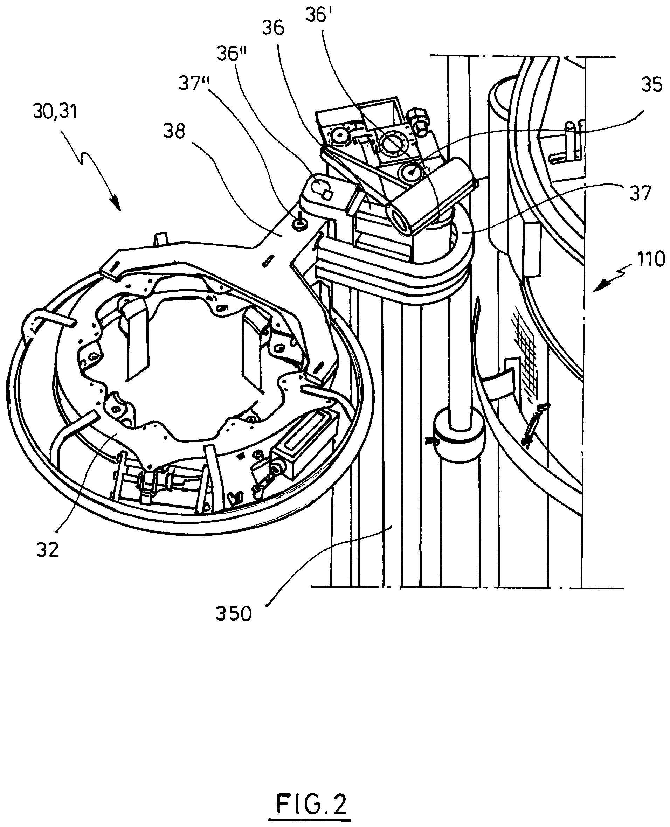

Figur 2 bildet die perspektivische Ansicht auf eine Handhabungsvorrichtung (30) ausgebildet als Entlader (31) ab. Dieses Ausführungsbeispiel der Handhabungsvorrichtung (30) ist gebildet durch wenigstens einen Ausleger (36) mit einem ersten Auslegerschwenkpunkt (36') und einem zweiten Auslegerschwenkpunkt (36"). Der wenigstens eine Ausleger (36) ist mit seinem ersten Auslegerschwenkpunkt (36') an einer Abstützung (35) derart festgelegt, dass der Ausleger (36) wenigstens um ein Bogenmaßbetrag um der ersten Auslegerschwenkpunkt (36') schwenkbar gehaltert ist. Der erste Auslegerschwenkpunkt (36') ist vorzugsweise durch ein Drehgelenk gebildet, dessen Drehachse dem Ausleger (36) einen Verschwenkfreiheitsgrad in der Horizontalebene ermöglicht. An dem zweiten Auslegerschwenkpunkt (36") des Auslegers (36) ist ein Werkzeugarm (38) festgelegt. Auch der zweite Auslegerschwenkpunkt (36") ist vorzugsweise durch ein Drehgelenk gebildet, dessen Drehachse dem Werkzeugarm relativ zum Ausleger (36) und/oder relativ zur Abstützung (35) (35) einen Verschwenkfreiheitsgrad in der Horizontalebene wenigstens im Umfang eines Bogenmaßbetrages erlaubt.

Dargestellt ist in Figur 2 die Situation jeweils endseitig des Auslegers (36) festgelegter Auslegerschwenkpunkte (36', 36") in einer ortsfesten Ausgestaltung. Eine andere Ausführungsform kann die Auslegerschwenkpunkte (36', 36") in einer ortsvariablen Gestaltung vorsehen, sodass die Drehpunkte längs des Auslegers (36) verschiebbar und damit die Gesamtbewegungsbahn situationsangepasst definiert werden kann. Dies kann beispielsweise durch Langlochaufnahmen realisiert werden, welche die Drehgelenke (36', 36") mit dem Ausleger (36) verbinden.

Das Kopplungsmittel (37) der gezeigten Ausführungsvariante ist gebildet durch einen Arm, dessen Enden einen ersten und einen zweiten Kopplungsmittelschwenkpunkt (37', 37") mit dem jeweiligen Verbindungpartner bilden. Im vorliegenden Beispiel ist der erste Kopplungsmittelschwenkpunkt (37') mit einer Aufnahme an der Basis (35) und der zweite Kopplungsmittelschwenkpunkt (37") mit einer Aufnahme an dem Werkzeugarm (38) gebildet. Auf diese Weise realisiert die Erfindung durch die wenigstens bereichsweise Koordination der Schwenkbewegung des Auslegers (36) zur Basis (35) um den ersten Auslegerschwenkpunkt (36') und der Schwenkbewegung des Werkzeugarms (38) zum Ausleger (36) um den zweiten Auslegerschwenkpunkt (36") eine Gesamtbewegungsbahn.

Diese wenigstens bereichsweise koordinierte Gesamtbewegungsbahn kann in zweierlei Hinsicht genutzt werden: Zum einen können durch entsprechende Ausgestaltungen der geometrischen Absolutgrößen, Verhältnisse und Lagen des Auslegers (36), der Auslegerschwenkpunkte (36', 36"), des Kopplungsmittels (37) und der Kopplungsmittelschwenkpunkte (37', 37") praktisch beliebige Punkte lokal im Raum angefahren und Reifen (200, 200') aufgenommen und/oder abgelegt werden. Zum anderen kann die absolute Handhabungsreichweite erweitert werden.

Eine weitere Steigerung der Handhabungsreichweite der Greifwerkzeuge (32, 34) und/oder Erhöhung der Flexibilität hinsichtlich der anfahrbaren Greifpunkte wird durch die Formgebung des Kopplungsmittels (37) ausgebildet als Arm unterstützt. Wird der Arm (37) wenigstens teilweise gebogen und damit von einem geraden Verlauf abweichend ausgebildet, ist es möglich, den Bogenmaßbetrag wenigsten einer der Schwenkbewegungen um einen der Auslegerschwenkpunkte (36', 36") zu vergrößern und damit den Bereich der Gesamtbewegungsbahn nochmals auszudehnen.

Vorzugsweise ist daran gedacht, die Aufnahme (35) als Basis (35') und/oder als Schlitten (35") einer Verfahreinrichtung (350) auszubilden die geeignet ist die Handhabungsvorrichtung (30) zu verfahren und damit den Freiheitsgrad in einer dritten Raumrichtung zu unterstützen.

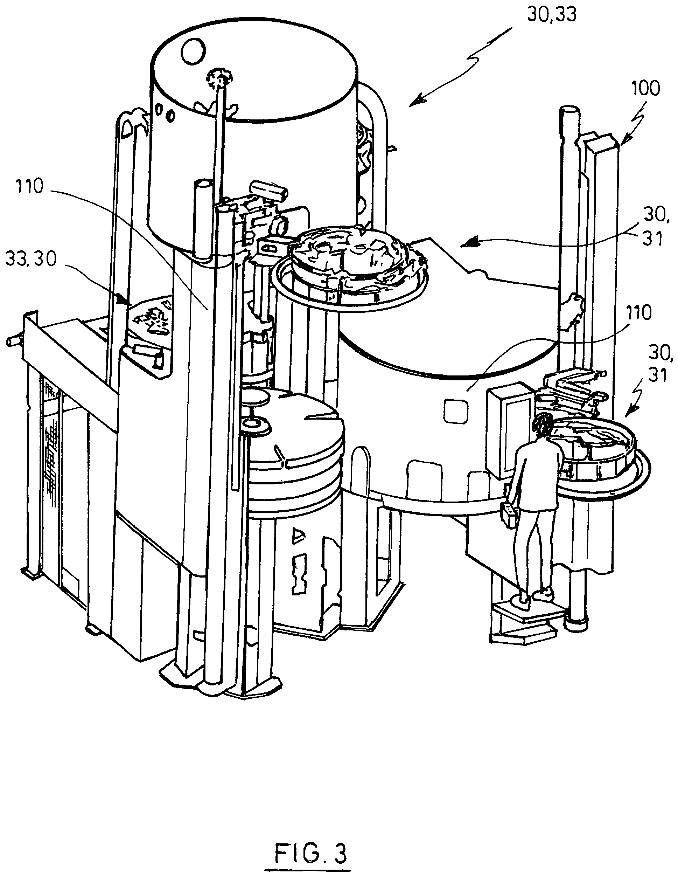

Figur 3 umfasst die dreidimensionale Ansicht auf eine Reifenvulkanisiermaschine (100) mit zwei Behandlungsräumen (110) beziehungsweise zwei benachbart angeordnete Reifenvulkanisiermaschinen (100) mit Handlingsequipment ähnlich der Situation wie sie Figur 1 abbildet. Die Darstellung zeigt insbesondere die Anforderungen hinsichtlich der Handhabungsreichweite der Greifwerkzeuge und möglichst großer Flexibilität der anfahrbaren Greifpunkte sowie die relativen Größenverhältnisse der einzelnen Komponenten zueinander.

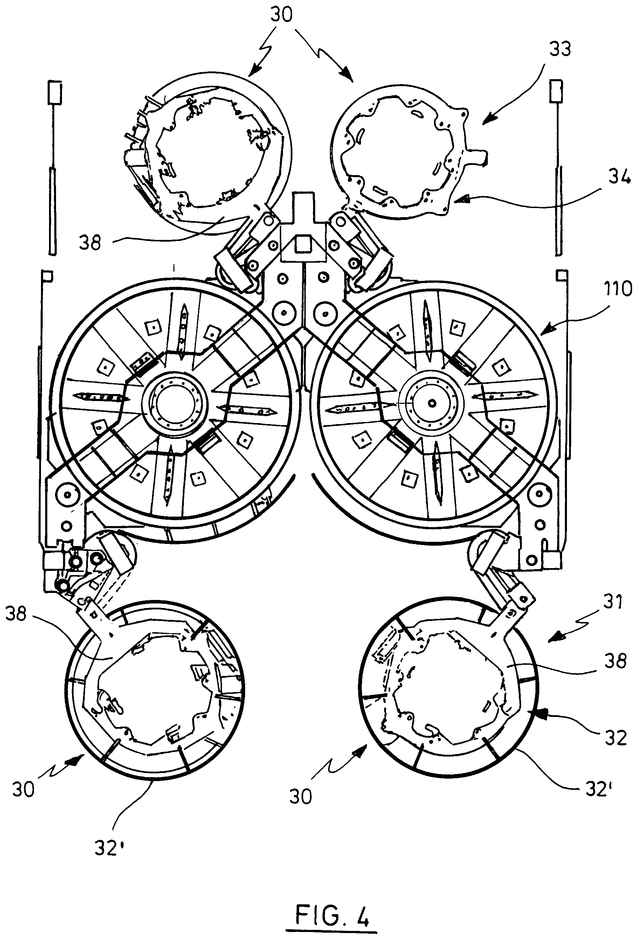

Figur 4 zeigt die Draufsicht auf die perspektivische Darstellung einer Reifenvulkanisiermaschine (100) mit zwei Behandlungsräumen (110) beziehungsweise zwei benachbart angeordnete Reifenvulkanisiermaschinen (100) mit Handlingsequipment, realisiert durch Handhabungsvorrichtungen (30) in Form von Beladern (33), Entladern (31).

Die funktionelle Unterscheidung der Handhabungsvorrichtung (30) zwischen Belader (33) und Entlader (31) ergibt sich durch die Gestaltung der Greifwerkzeuge (32, 34), die durch die jeweiligen Werkzeugarme (38) reversibel und damit auswechselbar gehaltert werden.

Der Entlader (31) wird durch eine Handhabungsvorrichtung (30) gebildet dadurch, dass mit dem Werkzeugarm (38) ein Entladergreifwerkzeug (32) gehaltert ist. Dieses Entladergreifwerkzeug (32) ist auf die besondere Empfindlichkeit der aus dem Behandlungsraum (110) zu entladenden restwärmebehafteten Fertigreifen (200) abgestimmt und konstruiert, um Beschädigungen und/oder Verformungen zu vermeiden. Es kann ein Distanzhalter in Form eines außen an dem Werkzeug angebrachten Ringes (32') vorgesehen sein, um den restwärmebehafteten Reifen (200) bei der Handhabung vor Kontakten zu schützen.

Der Belader (33) wird durch eine Handhabungsvorrichtung (30) gebildet dadurch, dass mit dem Werkzeugarm (38) ein Beladergreifwerkzeug (34) gehaltert ist. Sowohl Beladergreifwerkzeug (34) als auch Entladergreifwerkzeug (32) können entweder innenseitig oder außenseitig am zu handhabenden Reifen (200, 200') angreifende Klemmbacken verfügen. Eine statisch bestimmte Anordnung ist durch die Verwendung von drei Klemmbacken auf dem Umfang verteilt unterstützt. Es können auch vier oder mehr Klemmbacken vorgesehen sein, um eine möglichst schonende Greifsituation herzustellen.

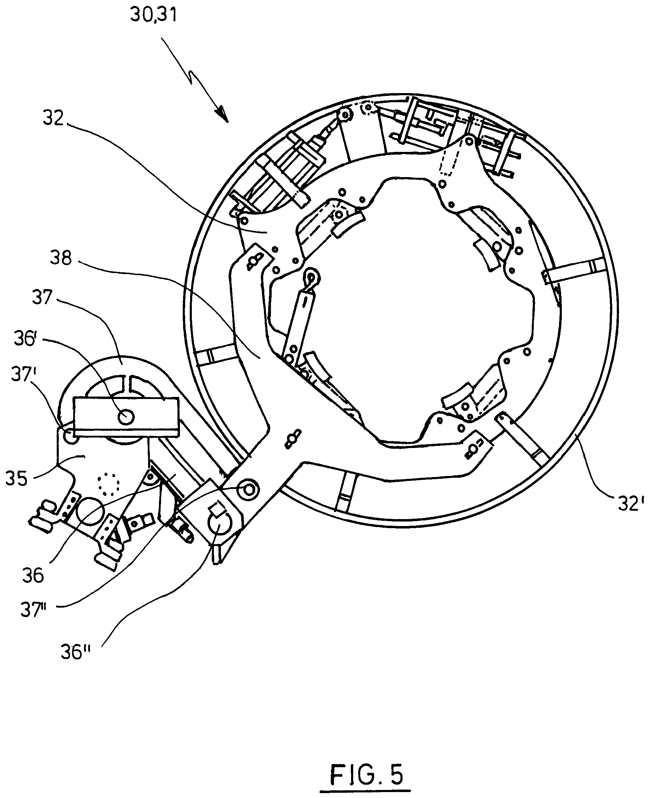

Figur 5 umfasst die Draufsicht auf ein perspektivisches Modell der erfindungsgemäßen Handhabungsvorrichtung (30) in einem Ausführungsbeispiel als Entlader (31) in der Nähe einer ersten möglichen Endlage einer Gesamtbewegungsbahn. Die jeweiligen Endlagen können erfindungsgemäß auf verschiedene Weise definiert und festgelegt sein. Möglich ist die geometrische Endlagendefinition durch die trapezbildenden Komponenten bestehend aus Kopplungsmittel (37), Ausleger (36) und den jeweiligen Schwenkpunkten (36', 36", 37', 37") zueinander. Endanschläge können alternativ oder additiv dazu vorgesehen sein. Eine weitere Möglichkeit besteht darin, einen gesteuerten Drehantrieb in einem der Schwenkpunkte (36', 36", 37', 37"), vorzugsweise in dem ersten Auslegerschwenkpunkt (36') vorzusehen.

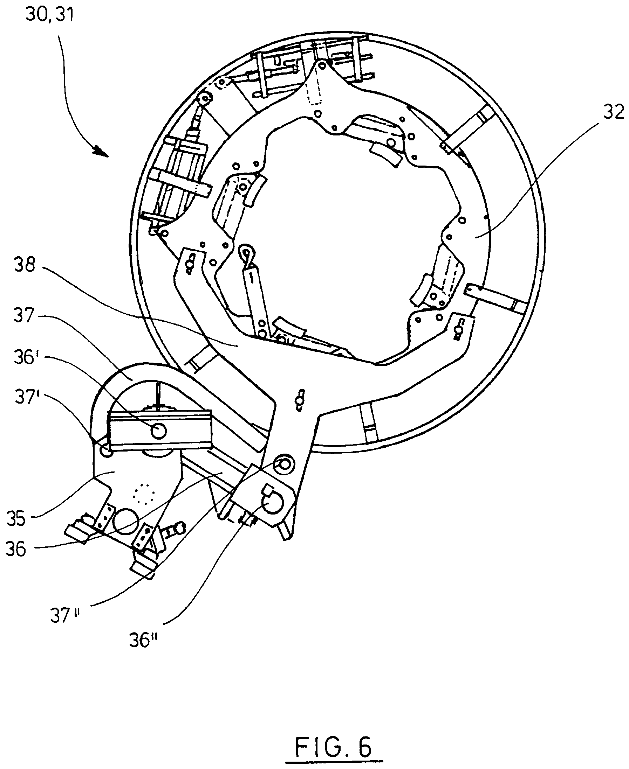

Figur 6 bildet die Draufsicht auf ein perspektivisches Modell der erfindungsgemäßen Handhabungsvorrichtung (30) analog zu Figur 5 in einem Ausführungsbeispiel als Entlader (31) in einer möglichen Position der Gesamtbewegungsbahn ab. Gegenüber Figur 5 ist das Greifwerkzeug (32) der Handhabungsvorrichtung (30) durch eine wenigstens teilweise Koordination der Schwenkbewegungen verfahren.

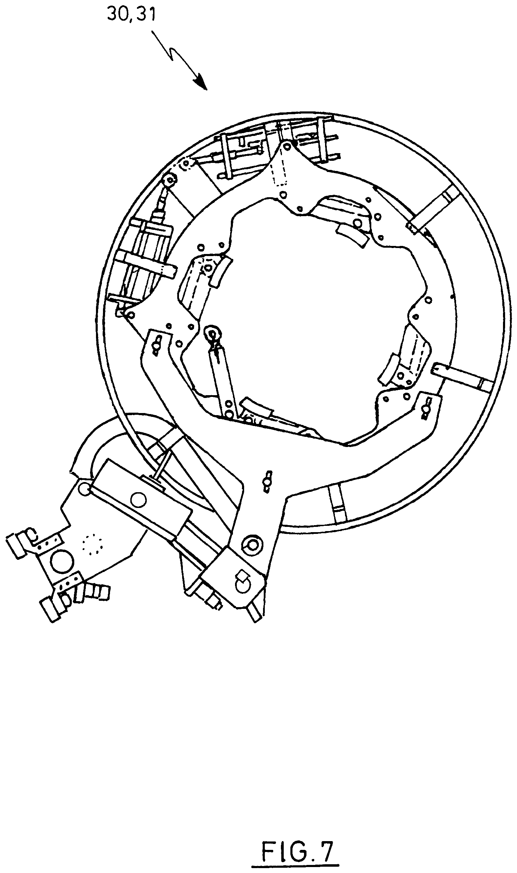

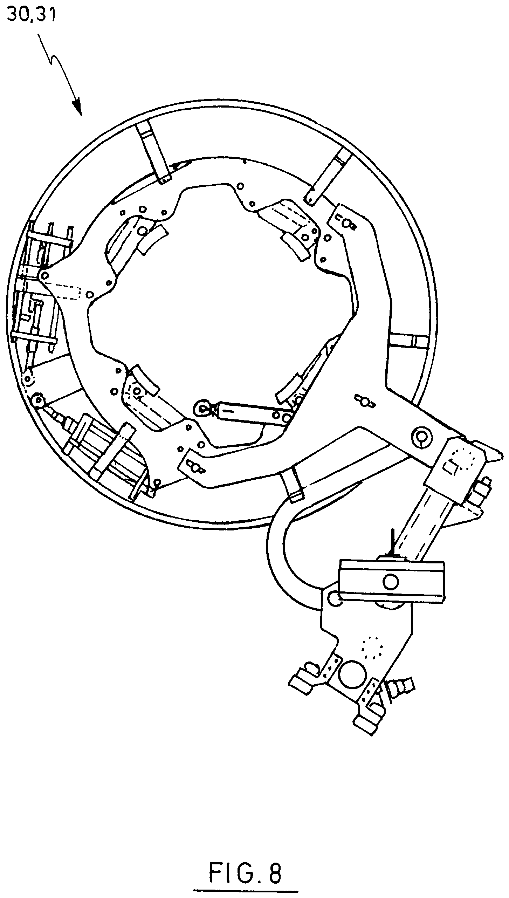

Figur 7und 8 zeigen die Handhabungsvorrichtung (30) analog zu Figur 5 und 6 in weiteren möglichen Positionen der Gesamtbewegungsbahn.

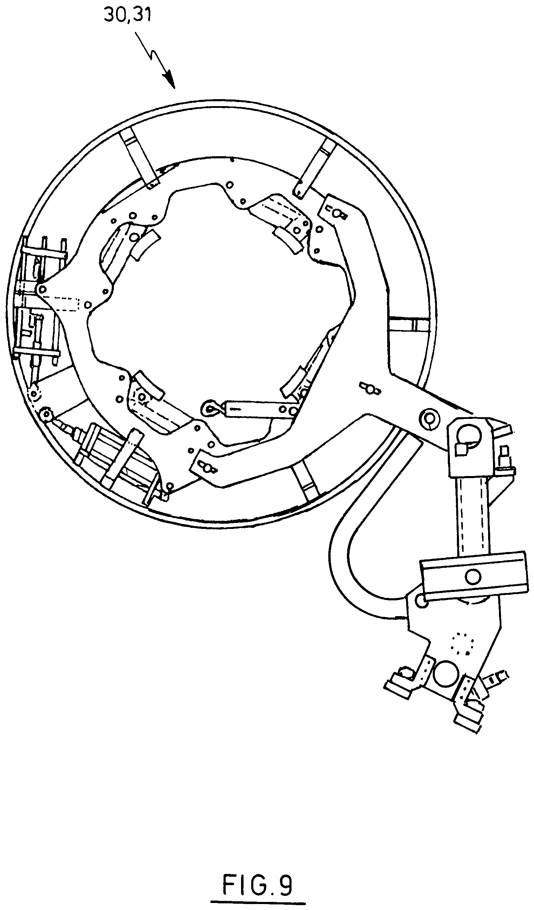

Figur 9 illustriert die Handhabungsvorrichtung (30) analog zu Figur 5 bis 8 in der Nähe einer zweiten möglichen Endlage.

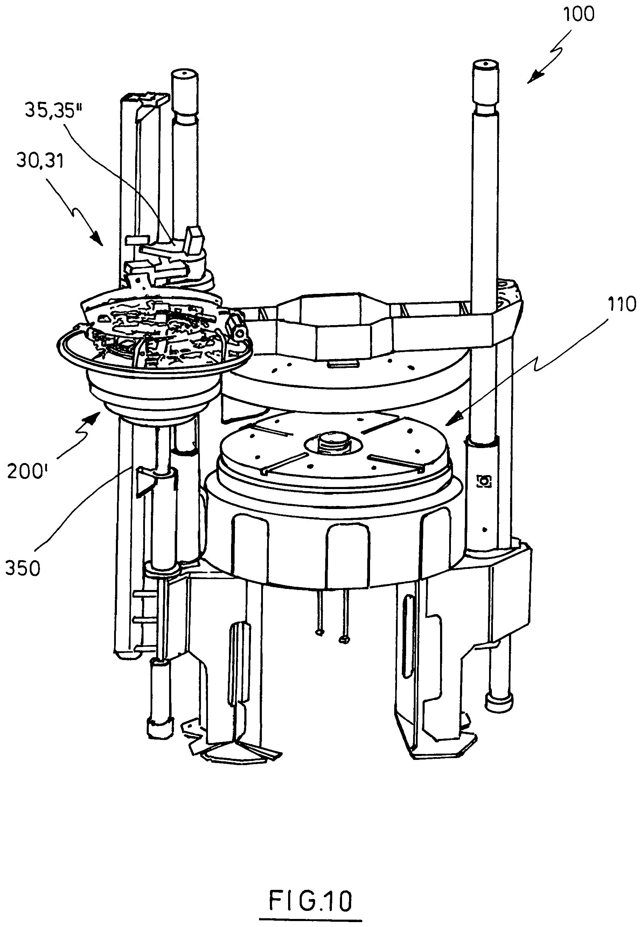

Figur 10 stellt die dreidimensionale Ansicht auf eine Reifenvulkanisiermaschine (100) mit einem Behandlungsraum (110) und der Handhabungsvorrichtung (30) mit aufgenommenem Reifen (200) dar. In diesem Ausführungsbeispiel ist die Aufnahme (35) der Handhabungsvorrichtung (330) als Schlitten (35") einer Verfahreinrichtung (350) gestaltet. Die Verfahreinrichtung bietet die Möglichkeit, den durch die Gesamtbewegungsbahn in horizontaler Ebene geschaffenen Freiheitsgrad um eine weitere Raumrichtung zu erweitern. Auf diese Weise können Greifpunkte innerhalb eines Handhabungsraumes angefahren werden.

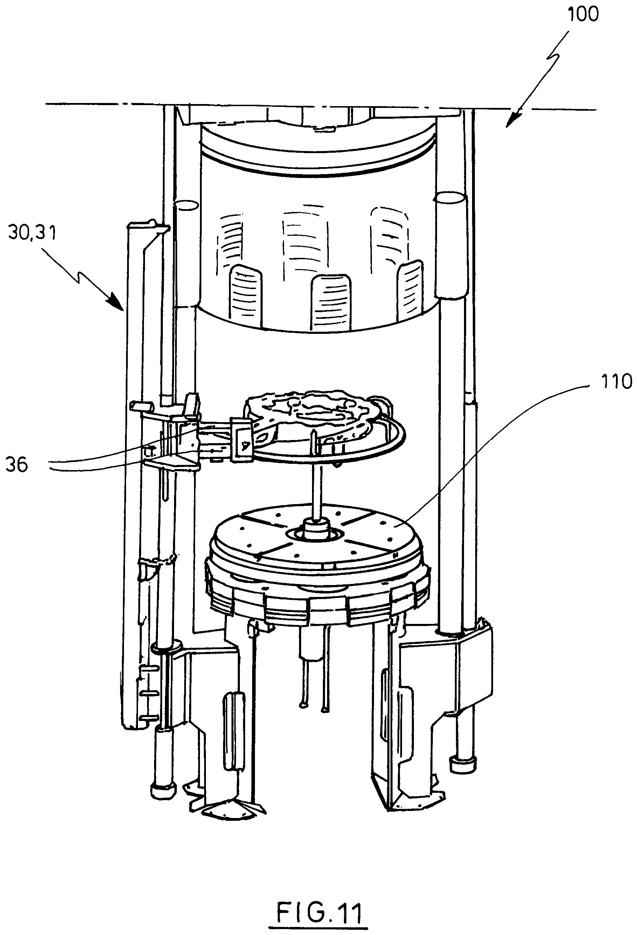

Figur 11 verdeutlicht in perspektivischer Ansicht analog Figur 10 und mit dem Behandlungsraum (110) in geöffneter Stellung die Handhabungsvorrichtung (30) in einer Position mit Greifwerkzeug (32) innerhalb des Behandlungsraumes (110). Diese Ansicht verdeutlicht eine weitere Ausgestaltungsmöglichkeit der Handhabungsvorrichtung (30) mit einem Ausleger (36) gebildet durch zwei Arme. Diese Konstruktion bietet eine erheblich gesteigerte Gestaltfestigkeit und Tragfähigkeit gegenüber Auslegern mit einem Arm dadurch, dass die wirkenden Kräfte auf zwei Arme verteilbar sind und die Aufnahmen für die Auslegerschwenkpunkte (36', 36") um ein Vielfaches stabiler ausgeführt werden können.

Eine weitere Steigerung der Gestaltfestigkeit der Handhabungsvorrichtung (30) in seiner Gesamtheit kann dadurch unterstützt werden, dass das Kopplungsmittel (37) neben seiner Kopplungsfunktion derart gestaltet wird, dass es praktisch als dritter Arm weitere auf die Gesamtkonstruktion wirkende Kräfte, Biegemomente und Torsionsbeanspruchungen aufnimmt.

## Patentansprüche

1. Handhabungsvorrichtung (30) für Reifen (200, 200'), die als ein Belader und/oder Entlader einer Reifenvulkanisiermaschine ausgebildet ist, aufweisend wenigstens ein Greifwerkzeug (32, 34) und einen Ausleger (36), wobei der Ausleger (36) mit einem ersten Auslegerschwenkpunkt (36') an einer Aufnahme (35) derart festgelegt ist, dass ein Verschwenken des Auslegers (36) relativ zur Aufnahme (35) entlang einer Bewegungsbahn unterstützt ist und dass der Ausleger (36) einen zweiten Auslegerschwenkpunkt (36") aufweist, der das wenigstens eine Greifwerkzeug (32, 34) über einen Werkzeugarm (38) derart mit dem Ausleger (36) koppelt, dass ein Verschwenken des Werkzeugarms (38) relativ zum Ausleger (36) und/oder der Aufnahme (35) entlang der Bewegungsbahn unterstützt ist, **dadurch gekennzeichnet, dass** wenigstens ein Kopplungsmittel (37) vorgesehen ist, dass die Schwenkbewegungen um die Auslegerschwenkpunkte (36', 36") wenigstens teilweise derart koordiniert, dass eine Gesamtbewegungsbahn des Greifwerkzeugs (32, 34) durch wenigstens teilweise überlagerte Schwenkbewegungen mit einer Schwenkbewegung des Auslegers (36) um den ersten Auslegerschwerpunkt (36') und einer Schwenkbewegung des Werkzeugarmes (38) relativ zum Ausleger (36) um den zweiten Auslegerschwerpunkt (36") unterstützt ist, dass die Gesamtbewegungsbahn eine definierte Bahn ist, wobei das Kopplungsmittel (37) ein wenigstens teilweise gebogener Arm ist.

2. Handhabungsvorrichtung (30) für Reifen (200, 200') nach Anspruch 1, **dadurch gekennzeichnet, dass** sich die koordinierte Gesamtbewegungsbahn in einer horizontalen Ebene erstreckt.

3. Handhabungsvorrichtung (30) für Reifen (200, 200') nach Anspruch 1, **dadurch gekennzeichnet, dass** die koordinierte Gesamtbewegungsbahn eine gegenüber einer Schwenkbewegung um einen Auslegerschwenkpunkt (36', 36") vergrößerte Handhabungsreichweite unterstützt.

4. Handhabungsvorrichtung (30) für Reifen (200, 200') nach Anspruch 1, **dadurch gekennzeichnet, dass** die koordinierte Gesamtbewegungsbahn eine gegenüber einer Schwenkbewegung um einen Auslegerschwenkpunkt (36', 36") vergrößerte Anzahl anfahrbarer Greifpunkte unterstützt.

5. Handhabungsvorrichtung (30) für Reifen (200, 200') nach Anspruch 1, **dadurch gekennzeichnet, dass** die koordinierte Gesamtbewegungsbahn durch eine mathematische Funktion beschreibbar ist, die zwei Kreisbögen beschreibt die mit einer Unstetigkeitsstelle verbunden sind.

6. Handhabungsvorrichtung (30) für Reifen (200, 200') nach Anspruch 1, **dadurch gekennzeichnet, dass** die koordinierte Gesamtbewegungsbahn durch eine geometrisch-stetige Funktion beschreibbar ist.

7. Handhabungsvorrichtung (30) für Reifen (200, 200') nach Anspruch 1, **dadurch gekennzeichnet, dass** das Kopplungsmittel (37) mit der Aufnahme (35) und/oder dem Werkzeugarm (38) gekoppelt ist, sodass Kopplungsmittel (37) und Ausleger (36) eine Trapezschenkelanordnung bilden.

8. Handhabungsvorrichtung (30) für Reifen (200, 200') nach Anspruch 1, **dadurch gekennzeichnet, dass** das Kopplungsmittel (37) durch einen ersten Kopplungsmittelschwenkpunkt (37') und einen zweiten Kopplungsmittelschwenkpunkt (37") gekoppelt ist.

9. Handhabungsvorrichtung (30) für Reifen (200, 200') nach Anspruch 8, **dadurch gekennzeichnet, dass** die Schwenkpunkte (36', 36", 37', 37") durch jeweils ein Drehgelenk gebildet sind, wobei die Drehgelenke einen Freiheitsgrad in wenigstens einer Schwenkrichtung unterstützen.

10. Handhabungsvorrichtung (30) für Reifen (200, 200') nach Anspruch 1, **dadurch gekennzeichnet, dass** das Kopplungsmittel (37) mit der Aufnahme (35) funktionell eine Trapezsteuerung bildet.

11. Handhabungsvorrichtung (30) für Reifen (200, 200') nach Anspruch 1, **dadurch gekennzeichnet, dass** der Arm wenigstens teilweise von einer geraden Erstreckung abweicht sodass wenigstens eine der Schwenkbewegungen um einen Schwenkpunkt (36', 36", 37', 37") einen vergrößerten Bogenmaßbetrag aufweist.

12. Handhabungsvorrichtung (30) für Reifen (200, 200') nach Anspruch 1, **dadurch gekennzeichnet, dass** die Aufnahme (35) eine Basis (35') oder ein Schlitten (35") einer Verfahreinrichtung (350) ist, die einen Verfahrweg in einer vertikalen Richtung unterstützt.

13. Handhabungsvorrichtung (30) für Reifen (200, 200') nach Anspruch 2 und 12, **dadurch gekennzeichnet, dass** Greifpunkte innerhalb eines Handhabungsraumes anfahrbar sind.

14. Handhabungsvorrichtung (30) für Reifen (200, 200') nach Anspruch 1, **dadurch gekennzeichnet, dass** der Ausleger (36) durch zwei Arme gebildet ist, sodass eine hohe Gestaltfestigkeit und/oder Tragfähigkeit unterstützt ist.

15. Handhabungsvorrichtung (30) für Reifen (200, 200') nach Anspruch 1, **dadurch gekennzeichnet, dass** das Kopplungsmittel (37) als Tragarm ausbildet ist, sodass additiv zur Kopplungsfunktion auch Kräfte, Biegemomente und Torsionsbeanspruchungen aufnehmbar sind.

16. Handhabungsvorrichtung (30) für Reifen (200, 200') nach Anspruch 1, **dadurch gekennzeichnet, dass** eine Greifwerkzeugaufnahme (38) das Greifwerkzeug (32, 34) in einer lösbaren Verbindung haltert, sodass ein Entladerwerkzeug (32) oder ein Beladerwerkzeug (34) aufnehmbar ist.

17. Handhabungsvorrichtung (30) für Reifen (200, 200') nach Anspruch 1, **dadurch gekennzeichnet, dass** die Greifwerkzeuge (32, 34) wenigstens durch drei Klemmbacken gebildet sind, sodass ein Reifen (200, 200') außen- und/oder innenseitig statisch bestimmt greifbar ist.

18. Handhabungsvorrichtung (30) für Reifen (200, 200') nach Anspruch 17, **dadurch gekennzeichnet, dass** das Entladerwerkzeug (34) ein Distanzhalter in Form eines außen an dem Werkzeug angebrachten Ringes (32') aufweist.

19. Verwendung der Handhabungsvorrichtung (30) nach einem der vorgehenden Ansprüche als Bestandteil des Handlingsequipments (30, 60, 300) einer Reifenvulkanisiermaschine (100).

## Claims

1. Handling device (30) for tyres (200, 200'), which is configured as a loading and/or unloading device of a tyre vulcanization machine, having at least one gripping tool (32, 34) and an outrigger (36), wherein the outrigger (36) by way of a first outrigger pivot point (36') is established on a receptacle (35) in such a manner that pivoting of the outrigger (36) relative to the receptacle (35) along a motion trajectory is supported, and that the outrigger (36) has a second outrigger pivot point (36") which by way of a tool arm (38) couples the at least one gripping tool (32, 34) to the outrigger (36) in such a manner that pivoting of the tool arm (38) relative to the outrigger (36) and/or to the receptacle (35) along the motion trajectory is supported, **characterized in that** at least one coupling means (37) which at least partially coordinates the pivoting movements about the outrigger pivot points (36', 36") in such a manner that a total motion trajectory of the gripping tool (32, 34) is supported by way of at least partially superposed pivoting movements, having a pivoting movement of the outrigger (36) about the first outrigger pivot point (36') and a pivoting movement of the tool arm (38) relative to the outrigger (36) about the second outrigger pivot point (36") is provided, and **in that** the total motion trajectory is a defined trajectory, wherein the coupling means (37) is an at least partially curved arm.

2. Handling device (30) for tyres (200, 200') according to Claim 1, **characterized in that** the coordinated total motion trajectory extends in a horizontal plane.

3. Handling device (30) for tyres (200, 200') according to Claim 1, **characterized in that** the coordinated total motion trajectory supports a handling range that is enlarged in relation to a pivoting movement about an outrigger pivot point (36', 36").

4. Handling device (30) for tyres (200, 200') according to Claim 1, **characterized in that** the coordinated total motion trajectory supports a number of approachable gripping points that is larger in relation to a pivoting movement about an outrigger pivot point (36', 36").

5. Handling device (30) for tyres (200, 200') according to Claim 1, **characterized in that** the coordinated total motion trajectory is able to be described by a mathematical function which describes two circular arcs which are connected to a point of discontinuity.

6. Handling device (30) for tyres (200, 200') according to Claim 1, **characterized in that** the coordinated total motion trajectory is able to be described by a geometrically consistent function.

7. Handling device (30) for tyres (200, 200') according to Claim 1, **characterized in that** the coupling means (37) is coupled to the receptacle (35) and/or to the tool arm (38) such that the coupling means (37) and the outrigger (36) form a trapezoidal leg arrangement.

8. Handling device (30) for tyres (200, 200') according to Claim 1, **characterized in that** the coupling means (37) is coupled by way of a first central coupling pivot point (37') and a second central coupling pivot point (37").

9. Handling device (30) for tyres (200, 200') according to Claim 8, **characterized in that** the pivot points (36', 36", 37', 37") are in each case formed by a rotary joint, wherein the rotary joints support a degree of freedom in at least one pivoting direction.

10. Handling device (30) for tyres (200, 200') according to Claim 1, **characterized in that** the coupling means (37) conjointly with the receptacle (35) in terms of function forms a trapezoidal profile control.

11. Handling device (30) for tyres (200, 200') according to Claim 1, **characterized in that** the arm at least partially deviates from a straight extent such that at least one of the pivoting movements about a pivot point (36', 36", 37', 37") has an enlarged radian value.

12. Handling device (30) for tyres (200, 200') according to Claim 1, **characterized in that** the receptacle (35) is a base (35') or a slide (35") of a repositioning installation (350) which supports a repositioning path in a vertical direction.

13. Handling device (30) for tyres (200, 200') according to Claims 2 and 12, **characterized in that** the gripping points are approachable within a handling space.

14. Handling device (30) for tyres (200, 200') according to Claim 1, **characterized in that** the outrigger (36) is formed by two arms such that a high design strength and/or load capacity is supported.

15. Handling device (30) for tyres (200, 200') according to Claim 1, **characterized in that** the coupling means (37) is configured as a support arm such that, in addition to the coupling function, forces, bending torques and torsional stresses can also be absorbed.

16. Handling device (30) for tyres (200, 200') according to Claim 1, **characterized in that** a gripping tool receptacle (38) mounts the gripping tool (32, 34) in a releasable connection such that an unloading tool (32) or a loading tool (34) is receivable.

17. Handling device (30) for tyres (200, 200') according to Claim 1, **characterized in that** the gripping tools (32, 34) are formed by at least three clamping jaws such that a tyre (200, 200') on the outside and/or on the inside is able to be gripped in a statically defined manner.

18. Handling device (30) for tyres (200, 200') according to Claim 17, **characterized in that** the unloading tool (34) has a spacer in the form of a ring (32') that is externally attached to the tool.

19. Use of the handling device (30) according to one of the preceding claims, as a component part of the handling equipment (30, 60, 300) of a tyre vulcanization machine (100).

## Revendications

1. Dispositif de manipulation (30) pour pneus (200, 200'), qui est configuré sous la forme d'un chargeur et/ou d'un déchargeur d'une machine de vulcanisation de pneus, présentant au moins un outil de préhension (32, 34) et une console (36), la console (36) étant fixée par un premier point de pivotement de console (36') à un logement (35) de telle sorte qu'un pivotement de la console (36) par rapport au logement (35) le long d'une trajectoire de déplacement est supporté et que la console (36) présente un deuxième point de pivotement de console (36") qui couple l'au moins un outil de préhension (32, 34) à la console (36) par l'intermédiaire d'un bras d'outil (38) de telle sorte qu'un pivotement du bras d'outil (38) par rapport à la console (36) et/ou au logement (35) le long de la trajectoire de déplacement est supporté, **caractérisé en ce qu'**au moins un moyen de couplage (37) est prévu, **en ce que** les mouvements de pivotement autour des points de pivotement de console (36', 36") sont au moins partiellement coordonnés de telle sorte qu'une trajectoire de déplacement totale de l'outil de préhension (32, 34) est supportée par des mouvements de pivotement au moins partiellement superposés avec un mouvement de pivotement de la console (36) autour du premier point de pivotement de console (36') et un mouvement de pivotement du bras d'outil (38) par rapport à la console (36) autour du deuxième point de pivotement de console (36"), et **en ce que** la trajectoire de déplacement totale est une trajectoire définie, le moyen de couplage (37) étant un bras au moins partiellement courbé.

2. Dispositif de manipulation (30) pour pneus (200, 200') selon la revendication 1, **caractérisé en ce que** la trajectoire de déplacement totale coordonnée s'étend dans un plan horizontal.

3. Dispositif de manipulation (30) pour pneus (200, 200') selon la revendication 1, **caractérisé en ce que** la trajectoire de déplacement totale coordonnée supporte une portée de manipulation augmentée par rapport à un mouvement de pivotement autour d'un point de pivotement de console (36', 36").

4. Dispositif de manipulation (30) pour pneus (200, 200') selon la revendication 1, **caractérisé en ce que** la trajectoire de déplacement totale coordonnée supporte un nombre de points de préhension accessibles augmenté par rapport à un mouvement de pivotement autour d'un point de pivotement de console (36', 36").

5. Dispositif de manipulation (30) pour pneus (200, 200') selon la revendication 1, **caractérisé en ce que** la trajectoire de déplacement totale coordonnée peut être décrite par une fonction mathématique qui décrit deux arcs de cercle reliés par un point de discontinuité.

6. Dispositif de manipulation (30) pour pneus (200, 200') selon la revendication 1, **caractérisé en ce que** la trajectoire de déplacement totale coordonnée peut être décrite par une fonction géométrique continue.

7. Dispositif de manipulation (30) pour pneus (200, 200') selon la revendication 1, **caractérisé en ce que** le moyen de couplage (37) est couplé au logement (35) et/ou au bras d'outil (38) de telle sorte que le moyen de couplage (37) et la console (36) forment un agencement de branches de trapèze.

8. Dispositif de manipulation (30) pour pneus (200, 200') selon la revendication 1, **caractérisé en ce que** le moyen de couplage (37) est couplé par un premier point de pivotement de moyen de couplage (37') et un deuxième point de pivotement de moyen de couplage (37").

9. Dispositif de manipulation (30) pour pneus (200, 200') selon la revendication 8, **caractérisé en ce que** les points de pivotement (36', 36", 37', 37") sont formés respectivement par une articulation tournante, les articulations tournante supportant un degré de liberté dans au moins une direction de pivotement.

10. Dispositif de manipulation (30) pour pneus (200, 200') selon la revendication 1, **caractérisé en ce que** le moyen de couplage (37) forme fonctionnellement avec le logement (35) une commande trapézoïdale.

11. Dispositif de manipulation (30) pour pneus (200, 200') selon la revendication 1, **caractérisé en ce que** le bras s'écarte au moins partiellement d'une extension droite de telle sorte qu'au moins l'un des mouvements de pivotement autour d'un point de pivotement (36', 36", 37', 37") présente une amplitude d'arc augmentée.

12. Dispositif de manipulation (30) pour pneus (200, 200') selon la revendication 1, **caractérisé en ce que** le logement (35) est une base (35') ou un chariot (35") d'un appareil de déplacement (350) qui supporte une course de déplacement dans une direction verticale.

13. Dispositif de manipulation (30) pour pneus (200, 200') selon les revendications 2 et 12, **caractérisé en ce que** des points de préhension sont accessibles à l'intérieur d'un espace de manipulation.

14. Dispositif de manipulation (30) pour pneus (200, 200') selon la revendication 1, **caractérisé en ce que** la console (36) est formée par deux bras, de telle sorte qu'une grande résistance à la déformation et/ou une grande capacité de charge sont supportées.

15. Dispositif de manipulation (30) pour pneus (200, 200') selon la revendication 1, **caractérisé en ce que** le moyen de couplage (37) est configuré sous forme de bras porteur, de telle sorte que des forces, des moments de flexion et des contraintes de torsion peuvent également être absorbés en plus de la fonction de couplage.

16. Dispositif de manipulation (30) pour pneus (200, 200') selon la revendication 1, **caractérisé en ce qu'**un logement d'outil de préhension (38) maintient l'outil de préhension (32, 34) dans une liaison amovible, de telle sorte qu'un outil de déchargement (32) ou un outil de chargement (34) peut être logé.

17. Dispositif de manipulation (30) pour pneus (200, 200') selon la revendication 1, **caractérisé en ce que** les outils de préhension (32, 34) sont formés par au moins trois mâchoires de serrage, de telle sorte qu'un pneu (200, 200') peut être saisi de manière statiquement déterminée à l'extérieur et/ou à l'intérieur.

18. Dispositif de manipulation (30) pour pneus (200, 200') selon la revendication 17, **caractérisé en ce que** l'outil de déchargement (34) présente un écarteur sous la forme d'une bague (32') montée à l'extérieur sur l'outil.

19. Utilisation du dispositif de manipulation (30) selon l'une des revendications précédentes en tant que constituant de l'équipement de manipulation (30, 60, 300) d'une machine de vulcanisation de pneus (100).
